# EUROPEAN PATENT APPLICATION

(11) **EP 0 919 600 A1**
(43) Date of publication of application: **02.06.1999**
(21) Application number: 97926263.1
(22) Date of filing: 17.06.1997
(51) Int. Cl.: C09D 11/00, B41M 7/00, D21H 27/00

(54) **WATER-REPELLENT OVERPRINT VARNISH COMPOSITION AND PRINTED MATTER MADE BY USING THE SAME**

(71) Applicant: TOYO INK MANUFACTURING CO., LTD., Chuo-ku, Tokyo 104 (JP); TOPPAN PRINTING CO., LTD., Tokyo 110 (JP)
(72) Inventor: SATO, Kouji, Toyo Ink Manufacturing Co., Ltd, Chuo-ku, Tokyo 104 (JP); ENDO, Isao, Toyo Ink Manufacturing Co., Ltd, Chuo-ku, Tokyo 104 (JP); OMINO, Toshio, Toyo Ink Manufacturing Co., Ltd, Chuo-ku, Tokyo 104 (JP); SHIMONURI,Kiyohide, Toyo Ink Manufacturing Co.,Ltd, Chuo-ku, Tokyo 104 (JP); TAKAHASHI, Masaru, Adachi-ku, Tokyo 120 (JP)
(74) Representative: Bühling, Gerhard, Dipl.-Chem.
(86) International application number: JP9702076
(87) International publication number: WO9858031

(57) **Abstract**

Disclosed is a water repellent overprinting varnish composition, containing polytetrafluoroethylene particles having a volume average particle diameter of 2 to 5 µm in an amount of 20 to 340% by weight based on the solid component of the overprinting varnish composition.

## Description

### Technical Field

The present invention relates to a colorless and transparent to opaque white overprinting varnish composition excellent in water repellency and wear resistance and to a print using the same.

### Background Art

In general, an overprinting varnish (hereinafter referred to as "OP varnish") is used in order to improve the luster of the print and to protect the skin film of the print. To be more specific, a printing ink of various colors (such as yellow, scarlet, indigo and black) is printed first on a substrate sheet, followed by printing a colorless and transparent OP varnish on the print. If a drink such coffer or juice is dropped on the print in the conventional OP varnish, however, stains are attached to the surface of the print, with the result that the print is rendered sticky. Also, since the conventional OP varnish is insufficient in its water repellency, the skin film of the print is damaged, if the print such as a poster is exposed to wind and rain. Further, the conventional print does not necessarily exhibit a sufficient resistance to scratches.

As a measure for overcoming the above-noted difficulties, it is known to the art to mix an additive such as a polyethylene wax or a silicone-based additive with the conventional OP varnish. However, the obtained result is not necessarily satisfactory.

### Disclosure of Invention

An object of the present invention is to provide an OP varnish composition excellent in water repellency, wipe-out properties, wear resistance, etc.

Another object of the present invention is to provide a print protected by a protective layer excellent in water repellency and wear resistance.

These and other objects which will be become apparent from the following description has been accomplished according to the present invention by a water repelling overprinting varnish composition comprising 20 to 34% by weight of polytetrafluoroethylene particles having a volume average particle diameter of 2 to 5 micrometers (µm) based on the solid components of the overprinting varnish composition.

Further, according to the present invention, there is provided a print, comprising a substrate sheet, a printed ink skin layer formed on at least a part of the substrate sheet and constituting information capable of recognition of a concept driving type, and a transparent overprinting layer formed to cover the printed surface including the printed ink film, the transparent overprinting layer consisting of the OP varnish composition of the present invention.

### Best Mode of Carrying Out the Invention

In the OP varnish composition of the present invention, polytetrafluoroethylene (hereinafter referred to as "PTFE") serves to impart a water repellency and a wear resistance to the OP varnish composition. PTFE is contained in the OP varnish composition of the present invention in the form of particles.

The particle diameter of PTFE is represented in the present invention by a volume average particle diameter determined by, for example, a laser diffraction method or a Coulter Counter method, which are widely known to the art. In the present invention, the PTFE particles are defined to have a volume average particle diameter of 2 to 5 µm. Where the volume average particle diameter is smaller than 2 µm, the PTFE particles are buried in the OP varnish skin film, failing to protrude above the OP varnish skin film. As a result, the wear resistance of the print is deteriorated. On the other hand, where the volume average particle diameter of the PTFE particles is larger than 5 µm, the PTFE particles fail to be dispersed satisfactorily in the OP varnish and deteriorate the fluidity of the OP varnish composition. As a result, the PTFE particles are deposited on the printing plate or blanket of the printing machine. It is more desirable for at least 45% by weight of all the PTFE particles used to have a volume average particle diameter of 2 to 4 µm.

In the present invention, the PTFE particles are mixed with the OP varnish composition in an amount of 20 to 340% by weight based on the solid component (excluding the PTFE particles) of the total OP varnish composition. If the amount of the PTFE particles is smaller than 20% by weight based on the solid component of the OP varnish composition, the resultant composition fails to exhibit a sufficient water repellency, wipe-off properties and wear resistance. If the amount of the PTFE particles exceeds 340 % by weight based on the solid component of the OP varnish composition, however, the resultant composition is rendered insufficient in resistance to piling and in leveling properties. It is more desirable for the PTFE particles to be contained in an amount of 20 to 120% by weight based on the solid component except the PTFE particles of the OP varnish composition.

The solid component of the OP varnish composition of the present invention represents components of the OP varnish composition which are solid at ambient temperature (20° ). To be more specific, the solid component in question includes various resins used as vehicles and drying oils, excluding the solvent components.

The OP varnish composition of the present invention can be coated by, for example, an off-set printing method, a gravure printing method and a silk screen printing method. The coated OP varnish composition forms a substantially colorless and transparent skin film after drying.

In coating by off-set printing method, it is desirable for the OP composition of the present invention to comprise, except the PTFE particles, 20 to 80% by weight of resins such as a rosin-modified phenolic resin, petroleum resin, alkyd resin, or a drying oil-modified form thereof, 0 to 80% by weight of drying oils such as linseed oil, tung oil, and soybean oil, 0 to 80% by weight of a solvent such as a normal paraffin, isoparaffin, aromatic hydrocarbon, naphthene, α-olefin or a mixture thereof, and 1 to 5% by weight of an additive such as a dryer or a drying inhibitor (100% by weight in total, excluding PTFE particles). More preferably, the OP composition of the present invention should contain 0.3 to 4% by weight of the drying oil based on 1 part by weight of the resin.

In coating by gravure coating method, it is desirable for the OP composition of the present invention to contain, except the PTFE particles, 20 to 50% by weight of at least one resin selected from the group consisting of acrylic resin, vinyl chloride-vinyl acetate copolymer resin, polyester resin, urethane resin, chlorinated polyolefin resin, chlorinated rubber resin, ethylene-vinyl acetate copolymer resin, polyamide resin and cellulose resin, and 50 to 80% by weight of a solvent such as toluene, ethyl acetate, isobutyl acetate, methyl ethyl ketone, or methyl isobutyl ketone.

In coating the OP varnish composition of the present invention, a printed ink film constituting information capable of concept driving type recognition is formed on at least a part of the substrate sheet.

Any sheet can be used as the substrate sheet as far as the sheet is capable of receiving a printing ink. Particularly, it is desirable to use a pulp-based paper sheet, a synthetic resin-based plastic sheet and a synthetic resin-based synthetic paper sheet with improved capability of receiving a printing ink.

The pulp-based paper sheet includes, for example, a groundwood paper sheet, a mechanical paper sheet and a woodfree paper sheet.

The synthetic paper sheet includes, for example, a non-porous plastic film having one or both surfaces coated with a paint capable of receiving a printing ink so as to improve the capability of receiving the printing ink. The plastic film used for preparing the synthetic paper sheet includes, for example, polyvinylchloride film, polyethylene film, polypropylene film, and polyester film. Also, a paint containing a matting agent can be coated on the plastic film. The matting agent used in the present invention includes, for example, silica, calcium carbonate and barium sulfate.

It is also possible to use other synthetic paper sheets in the present invention. For example, a synthetic paper sheet used in the present invention can be prepared by foaming a plastic film to form a large number of fine pores. In this case, the fine pores thus formed permits improving the printing ink receiving capability of the resultant synthetic paper sheet. It is also possible to prepare a synthetic paper sheet by mixing fine powders, which can be dissolved in a solvent, with a plastic material, followed by removing the fine powders by using a solvent. In this case, the removal of the fine powders results in formation of fine pores in the plastic film. The fine pores thus formed permits improving the printing ink receiving capability of the resultant synthetic paper sheet. Further, it is also possible to prepare a synthetic paper sheet by using a mixture containing a plastic material and fine powders. In this case, a plastic film prepared from the mixture is elongated so as to generate fine cracks between the fine powder particle and the plastic material. The cracks thus generated permits improving the printing ink receiving capability of the resultant synthetic paper sheet.

It is also possible to use a substrate sheet having a coating layer formed on the surface, said coating layer being prepared by dispersing a clay-based material in a synthetic resin binder.

Such a clay-based materials include, for example, talc, clay, and kaolin. The synthetic resin binders include various synthetic resins including, for example, polyolefins such as polyethylene and polypropylene and other polymers such as polyvinyl chloride, polyvinyl acetate, and vinyl chloride-vinyl acetate copolymer. In the case of using a polyolefin as a synthetic resin binder, it is desirable to apply an oxidizing treatment to the polyolefin on the surface of the coating layer so as to increase the bonding strength of the coating layer to the OP varnish of the present invention. The oxidizing treatment can be performed by utilizing a corona discharge treatment, a flame treatment, an ozone treatment, etc. Incidentally, it is desirable for the coating layer to have a flat surface.

It suffices for the coating layer to be formed on that surface of the substrate sheet on which an overprinting layer is to be formed. In other words, it is not necessary to form such a coating layer on both surfaces of the substrate sheet.

A printed ink film used in the known printing technology can be formed on the substrate sheet in the present invention. For example, it is possible to use a printed ink film formed by a silk screen printing, a printed ink film formed by a gravure printing and a printed ink film formed by a gravure off-set printing. Further, the printed ink film need not be restricted to a film of a single color. In other words, it is also possible to use in the present invention a printed ink film of a multi-layer structure prepared by superposing a plurality of printed ink films of various colors one upon the other.

The printed ink film need not be formed over the entire surface of the substrate sheet. To be more specific, it suffices to form a printed ink film in a shape constituting a visible information capable of recognition of the concept driving type. The visible information capable of recognition of the concept driving type denotes a visible information which is recognized on the basis of the knowledge owned by the observer of the visible information. The visible information capable of recognition of the concept driving type differs from the visible information depending solely on the perception of the stimulation driving type (e.g., ornamental pattern such as a wood grain pattern). In the visible information capable of recognition of the concept driving type, the shape of the printed ink film has a meaning, and the particular meaning is recognized. To be more specific, the visible information capable of recognition of the concept driving type includes, for example, characters, symbols, e.g., symbols denoting the telephone or postal service, symbols denoting a fine weather or a rainy weather in a weather map, symbols denoting the copy right and the trademark right, symbols denoting rail roads and contour lines in a map, and photos of famous persons such as public entertainers, and various symbols and lines used in a floor plan of a structure. In general, the visible information capable of recognition of the concept driving type embodies the value of the print.

The OP varnish composition of the present invention is applied by the printing method described above to cover the printing surface including the printed ink film.

Now, the present invention will be described below by way of its Examples. In the following Examples, "parts" and "%" are by weight.

### Examples 1-3

Since the resin used was a solid, the resin was dissolved in a solvent and a drying oil so as to facilitate the use of the resin. Specifically, charged in a four-mouthed flask equipped with a stirrer were 40% by weight of a rosin-modified phenolic resin, 40% by weight of tung oil, and 20% by weight of Solvent #3 (a solvent manufactured by Japan Petrochemical Co., Ltd). The mixture charged in the flask was heated at 180°C for 1 hour so as to dissolve the resin in the tung oil and the solvent and, thus, to prepare a bailing varnish (hereinafter referred to as "varnish A").

Then, added to varnish A was a polyethylene wax, a silicone oil or FT wax FT-301 (PTFE particles manufactured by Seishin Inc., Japan and having a volume average particle diameter of 3.9 micrometers) in an amount shown in Table 1. The resultant mixture was sufficiently kneaded by a three-roll mill, followed by adding 0.3% by weight of cobalt naphthenate dryer, 0.3% by weight of manganese naphthenate dryer, and 1% by weight of a drying inhibitor (the amounts of the dryers and the drying inhibitor are not shown in Table 1).

**Table 1**

| | | | Wax | | | |
|---|---|---|---|---|---|---|
| | | Varnish A (% by weight) | Kind | Addition amount (% by weight) | Water repellency | Wear resistance |
| Comparative Examples | 1 | 98.4 | None | | 1 | 1 |
| | 2 | 78.4 | Polyethylene wax | 20.0 | 3 | 3 |
| | 3 | 58.4 | ditto | 40.0 | 4 | 4 |
| | 4 | 93.4 | Toshiba Silicone TSF4700 | 5.0 | 2 | 2 |
| | 5 | 58.4 | ditto | 40.0 | 4 | 4 |
| | 6 | 88.4 | PTFE | 10.0 | 3 | 3 |
| | 7 | 85.4 | PTFE | 13.0 | 4 | 4 |
| Examples | 1 | 81.4 | PTFE | 17.0 | 5 | 5 |
| | 2 | 78.4 | PTFE | 20.0 | 5 | 5 |
| | 3 | 68.4 | PTFE | 30.0 | 5 | 5 |
| | 4 | 60.4 | PTFE | 38.0 | 5 | 5 |

Each varnish was printed in an amount of 0.3 cc on a coated paper sheet by using a drawdown machine (RI tester), followed by allowing the print to stand at room temperature for 24 hours. Then, a water repellency test and a wear resistance test were conducted as follows:

### (Water Repellency Test)

A drop of coffee available on the market was dripped on the print, followed by wiping the coffee one minute later so as to evaluate the degree of stickiness of the print. The degree of stickiness was evaluated by 5 stages as given below, which are shown in Table 1:
5: excellent; 4: good; 3: fair; 2: somewhat poor; 1: poor

### (Wear Resistance)

Each print was rubbed 20 times with a Sutherland rub tester under a load of 2 pounds. The degree of scratching of the print was evaluated by 5 stages. Evaluations are as in the above-noted Water Repellency Test.

### Examples 5-7

Charged in a four-mouthed flask equipped with a stirrer were 22.5% of acryl polyol based on methyl methacrylate/butyl methacrylate, 2.5% by weight of vinyl chloride-vinyl acetate copolymer resin, 37.5% of toluene, 17.5% of isobutyl acetate, 15% of ethyl acetate, 2% of methyl isobutyl ketone and 3% of methyl ethyl ketone. The mixture was dissolved at 50°C to prepare a varnish B.

Then, added to 100 parts of varnish B were additives of wax and silicone oil together with the PTFE particles equal to those used in Example 1 in amounts shown in Table 2. These additives and the PFTE particles were sufficiently dispersed in the varnish B by using a dispersing machine.

**Table 2**

| | | Wax | | | |
|---|---|---|---|---|---|
| | | Kind | Addition amount (% by weight) | Water repellency | Wear resistance |
| Comparative Examples | 7 | None | | 2 | 1 |
| | 8 | Polyethylene wax | 1 | 3 | 3 |
| | 9 | ditto | 15 | 3 | 3 |
| | 10 | Toshiba Silicone TSF4700 | 1 | 3 | 1 |
| | 11 | ditto | 5 | 5 | 4 |
| | 12 | PTFE | 1 | 3 | 3 |
| Examples | 5 | PTFE | 5 | 5 | 5 |
| | 6 | PTFE | 8 | 5 | 5 |
| | 7 | PTFE | 10 | 5 | 5 |

Each varnish was printed on a coated paper sheet by using a small gravure proof press, followed by allowing the print to stand at room temperature for 24 hours. Then, tests were conducted as above. The test methods in the Table are the same as above.

### Example 8

Charged in a four-mouthed flask equipped with a stirrer were 25% of an acrylic resin (Paralloid B66 manufactured by Rohm and Haas Inc.), 30% of diacetone alcohol, 30% of methyl propylene glycol acetate, and 15% of petroleum naphtha (a boiling of 160 to 180°C). The resultant mixture was heated at 80°C over 2 hours so as to dissolve the resin and, thus, to prepare a varnish (hereinafter referred to as varnish C).

Then, added to 100 parts of varnish C were 5% of the PTFE particles used in Example 1 (20% with respect to the resin), and 1% acrylic oligomer (Polyflow 3 manufactured by Kyoei-sha Chemical Co., Ltd., Japan) as a leveling agent. The resultant mixture was stirred for 30 minutes by a high speed dissolver so as to obtain a uniformly dispersed OP varnish for a screen printing, having a viscosity of 46 poises.

Then, 25 parts of butyrocellosolve was added to 100 parts of the OP varnish so as to adjust the viscosity of the OP varnish (viscosity of 18 poises), followed by printing the OP varnish on a coated paper sheet by using a nylon printing form of 270 meshes. The printed varnish was dried at room temperature for 24 hours so as to obtain a dry film. The evaluation results of the water repellency and wear resistance of the OP varnish film conducted by the test methods described previously were 5 for the water repellency and 5 for the wear resistance.

### Example 9

Added to varnish C prepared in Example 8 were additives of 10% of PTFE particles (40% with respect to the resin) used in Example 1, and 1% of an acrylic oligomer (Polyflow 3 manufactured by Kyoei-sha Chemical Co., Ltd.), as a leveling agent. The resultant mixture was stirred for 30 minutes by using a high speed dissolver so as to obtain a uniformly dispersed OP varnish for a screen printing, having a viscosity of 46 poises.

Then, 20 parts of butyrocellosolve was added to 100 parts of the OP varnish so as to adjust the viscosity of the OP varnish (viscosity of 18 poises), followed by printing the OP varnish on a coated paper sheet by using a nylon printing form of 270 meshes. The printed varnish was dried at room temperature for 24 hours so as to obtain a dry film. The evaluation results of the water repellency and wear resistance of the OP varnish film conducted by the test methods described previously were 5 for the water repellency and 5 for the wear resistance. In addition, the OP varnish film exhibited an outer appearance having a matting effect.

### Comparative Example 13

A dry film was obtained as in Example 8, except that 5% of a polyethylene wax (PW powder M2010 manufactured by Toyo Petrolight Inc., Japan) was added in place of the PTFE particles. The evaluation results of the water repellency and wear resistance of the OP varnish film conducted by the test methods described previously were 3 for the water repellency and 3 for the wear resistance.

### Examples 9 - 12

The substrate sheets used were those having, on one surface of a polyethylene film, a coating layer prepared by mixing clay in a polyethylene binder.

A printed ink film was formed by printing a TSP ultra light-resisting ink manufactured by Toyo Ink Manufacturing Co., Ltd., Japan, on a part of the coating layer of the substrate sheet by an offset printing method. The ink used was yellow, cyan, magenta and black. The printed ink film of each of these four colors was partly overlapped with each other. Also, the printed ink film thus formed had a shape of a map as a visible information.

Then, the varnish in each of Examples 1 to 4 was printed to cover the printed ink film so as to form a transparent overprinting layer. An offset printing method was employed for forming the transparent overprinting layer. Also, the average thickness of the transparent overprinting layer was smaller than the volume average particle diameter of the PTFE wax particles, i.e., 3.9 micrometers.

A drop of a canned coffee available on the market was dripped on the transparent overprinting layer of the print thus obtained. The dripped coffee was wiped off one minute later with cloth so as to observe with the naked eye the presence of stains on the surface of the print. Stains on the surface were not observed in any of the prints for Examples 9 to 12.

### Examples 13 - 15

Coated paper sheets were used substrate as sheets.

A printed ink film was formed by printing a gravure ink (four colors of yellow, cyan, magenta and black) manufactured by Toyo Ink Manufacturing Co., Ltd., Japan, on a part of the substrate sheet by a gravure printing method. The printed ink film thus formed had a shape including characters and a half-length photograph of a public entertainer as a visible information.

Then, the varnish in each of Examples 5 to 7 was printed to cover the printed ink film so as to form a transparent overprinting layer. A gravure printing method was employed for forming the transparent overprinting layer. The average thickness of the transparent overprinting layer was smaller than the volume average particle diameter of the PTFE wax particles (3.9 micrometers).

A drop of a canned coffee available on the market was dripped on the transparent overprinting layer of the print thus obtained. The dripped coffee was wiped off one minute later with cloth so as to observe with the naked eye the presence of stains on the surface of the print. Stains on the surface were not observed in any of the prints for Examples 13 to 15.

As described above, the OP varnish composition of the present invention permits improving the water repellency, wiping properties and wear resistance.

## Claims

1. A water repellent overprinting varnish composition, comprising polytetrafluoro ethylene particles having a volume average particle diameter of 2 to 5 µm in an amount of 20 to 340% by weight based on the solid components of the overprinting varnish composition.

2. The water repellent overprinting varnish composition according to claim 1, wherein said overprinting varnish composition comprises, excluding the polytetrafluoro ethylene particles, 20 to 50% by weight of at least one resin selected from the group consisting of a rosin-denatured phenolic resin, petroleum resin, alkyd resin and a drying oil-modified resin, 0 to 80% by weight of a drying oil, and 0 to 80% by weight of a solvent.

3. The water repellent overprinting varnish composition according to claim 1, wherein said overprinting varnish composition comprises, excluding the polytetrafluoro ethylene particles, 20 to 50% by weight of at least one resin selected from the group consisting of acrylic resin, vinyl chloride-vinyl acetate copolymer resin, polyester resin, urethane resin, chlorinated polyolefin resin, chlorinated rubber resin, ethylene-vinyl acetate copolymer resin, polyamide resin and cellulose resin, and 50 to 80% by weight of a solvent.

4. A print comprising a substrate sheet, a printed ink film formed in at least a part of said substrate sheet and constituting information capable of recognition of the concept driving type, and a transparent overprinting layer formed to cover the printed surface including said printed ink film, wherein said transparent overprinting layer is formed of the varnish composition defined in claim 1.
